# FASCICULE DE BREVET EUROPEEN

(11) **EP 1 490 987 B1**
(45) Date de publication et mention de la délivrance du brevet: **10.08.2005**
(21) Numéro de dépôt: 02799793.1
(22) Date de dépôt: 06.12.2002
(51) Int. Cl.: H04B 7/10, H04B 7/08

(54) **PROCEDE D ANTIBROUILLAGE POUR RECEPTEUR DE SIGNAUX RADIOELECTRIQUES A SPECTRE ETALE**
ENTSTÖRVERFAHREN FÜR EMPFÄNGER VON SPREIZSPEKTRUM-FUNKSIGNALEN
ANTI-JAMMING METHOD FOR SPREAD-SPECTRUM RADIO SIGNAL RECEIVERS

(30) Priorité: 18.12.2001 FR 0116399
(43) Date de publication de la demande: 29.12.2004
(73) Titulaire: Thales, 75008 Paris (FR)
(72) Inventeur: KORPET, Damien, Thales Intellectual Property, F-94117 Arcueil Cedex (FR); RENARD, Alain, Thales Intellectual Property, F-94117 Arcueil Cedex (FR)
(74) Mandataire: Beylot, Jacques
(86) Numéro de dépôt international: PCT/FR2002/004222
(87) Numéro de publication internationale: WO 2003/055102

(56) Documents cités:
- EP-A- 0 942 540
- WO-A-97/40588
- US-A- 5 933 421
- US-A- 6 144 339
- US-B1- 6 201 801

## Description

L'invention est relative aux récepteurs de signaux radioélectriques à spectre étalé transmis par onde polarisée circulaire. Elle concerne plus particulièrement l'amélioration de la résistance au brouillage intentionnel ou non de ces récepteurs.

Les signaux à spectre étalé sont largement utilisés pour la transmission de données lorsque, pour diverses raisons, la puissance instantanée du signal reçu est faible, souvent inférieure au bruit thermique des étages d'entrée du récepteur. En effet, la technique de transmission en bande étalée consiste à transmettre des informations via une porteuse HF modulée par un signal large bande. La bande du signal est alors étalée et occupe une bande de fréquence égale à celle du signal modulant. Cette technique permet d'améliorer la résistance de la transmission au brouillage en donnant au signal transmis un spectre de fréquence s'apparentant à celle d'un bruit large bande. Elle permet, en outre, grâce à l'emploi de codes orthogonaux pour le signal modulant, de faire coexister plusieurs voies simultanées de transmission (Accès multiple par code).

L'étalement de spectre s'obtient le plus souvent, en modulant en phase les données binaires à transmettre ou leur porteuse de transmission au moyen d'une suite binaire pseudo-aléatoire qui joue le rôle de code de cryptage. Le désétalement en réception se fait en corrélant le signal reçu avec une copie de la suite binaire pseudo-aléatoire ayant servie à l'étalement, copie qui est engendrée localement en synchronisme avec celle modulant le signal reçu. La corrélation de désétalement, sur la durée de la suite binaire pseudo-aléatoire ayant servie à l'étalement ou sur une durée supérieure, inférieure cependant à celle d'une donnée transmise permet de faire ressortir la donnée transmise du bruit ambiant où elle se trouvait noyée.

Pour la transmission des signaux radioélectriques en espace libre, on utilise un couple d'antennes d'émission et de réception adaptées l'une à l'autre en ce sens que l'antenne de réception est conçue pour avoir une sensibilité maximale - avec la forme d'onde engendrée par l'antenne d'émission. L'onde radioélectrique pour une onde polarisée circulaire, a son vecteur champ électrique décrivant, dans un sens ou dans l'autre, un cercle (une ellipse) dans un plan orthogonal à la direction de propagation définie par la droite joignant le couple d'antennes d'émission et de réception. Deux types de polarisation sont orthogonaux s'ils correspondent à des ondes dont les vecteurs champ électriques sont constamment orthogonaux. Lorsque deux ondes ont des polarisations orthogonales, on dit qu'elles sont à polarisations croisées. Une antenne de réception optimisée pour une polarisation présente une sensibilité minimale pour la polarisation croisée. On admet communément que la différence de sensibilité peut atteindre 30 dB.

Entre deux mobiles ou entre un mobile et une station fixe, on utilise le plus souvent des antennes d'émission et de réception correspondant à une onde radioélectrique à polarisation circulaire droite ou gauche car une telle onde radioélectrique a l'avantage d'être moins sensible aux conditions de propagation qui peuvent introduire une rotation de plan de polarisation et de pouvoir être captée indépendamment des variations d'attitude de l'antenne de réception par rapport à l'antenne d'émission. Dans le cas d'une polarisation circulaire droite, la polarisation croisée est la polarisation circulaire gauche et inversement.

L'un des problèmes posés par la transmission de données au moyen de signaux radioélectriques à spectre étalé est la sensibilité des récepteurs aux brouilleurs proches, notamment dans le cas de transmissions de données avec des satellites, étant donnée la faible puissance disponible à bord et les distances importantes séparant émetteur et récepteur. Il est particulièrement aigu pour les systèmes de navigation par satellites où les récepteurs de signaux de navigation provenant de satellites équipent des porteurs évoluant à la surface ou au voisinage de la surface du globe dans des zones où l'activité radioélectrique peut être importante.

Un récepteur du système de navigation par satellites connu sous la désignation anglo-saxonne "Navstar Global Positioning System" (GPS) doit être capable d'exploiter un signal émis par un satellite distant d'une vingtaine de milliers de kilomètres avec une puissance de l'ordre d'une dizaine de Watts et lui parvenant avec une puissance inférieure de 20 dB au bruit thermique ambiant. Il se retrouve en sortie de l'antenne de réception avec un signal d'entrée ayant une puissance de l'ordre de - 130 dBm que le gain du traitement de désétalement lui permet d'extraire du bruit. Cependant, l'acquisition initiale du synchronisme entre la suite binaire pseudo-aléatoire engendrée localement et celle ayant modulé le signal émis, qui est nécessaire pour l'opération de désétalement, devient difficile en présence d'un signal de brouillage ayant une puissance supérieure de plus de 30 dB par rapport à celle du signal GPS, ce qui ne représente qu'une puissance de signal de brouillage de l'ordre de -100 dBm qu'il n'est pas difficile de dépasser pour un brouilleur intentionnel ou non car placé à une distance du récepteur beaucoup plus faible que les satellites de navigation à l'origine des signaux utiles.

Il a déjà été proposé de nombreuses méthodes pour diminuer la sensibilité aux brouillages, des récepteurs de signaux radioélectriques à bande étalée. Ces méthodes connues mettent en oeuvre trois types de traitement du signal reçu : le filtrage spectral ou temporel, le filtrage spatial et le filtrage polarimétrique.

Les techniques d'antibrouillage qui font appel au filtrage spectral ou temporel ont été développées pour s'affranchir des brouillages à bande étroite occupant moins de dix à vingt pour cent de la bande de fréquence du signal utile à spectre étalé. Elles consistent à détecter par une analyse spectrale la partie de bande utile affectée par les brouillages et à l'éliminer du signal reçu par un filtrage coupe-bande. La détection se base sur le fait que le signal utile a, en l'absence de brouillage à bande étroite, un spectre plat de bruit blanc dans la bande utile et que la présence d'un brouilleur à bande étroite se manifeste par un pic plus ou moins large déformant le spectre du signal reçu. Ce filtrage coupe-bande altère le signal reçu puisqu'il le prive d'une partie de son contenu. Il ne peut donc être utilisé pour des brouilleurs large bande. Il permet cependant de s'affranchir d'un certain nombre de signaux parasites constitués d'une porteuse pure fixe dite CW (Continuous Wave en anglo-saxon), à balayage dite SCW (Sweep Continuous Wave en anglo-saxon), pulsée dite PCW (pulsed Continuous Wave en anglo-saxon) ou modulée par un signal de modulation à bande étroite.

Les techniques d'antibrouillage par filtrage spatial consistent à modeler le diagramme de rayonnement de l'antenne de réception de manière à favoriser la réception dans les directions des signaux utiles au détriment de la réception dans les directions des signaux de brouillage. Elles ont l'avantage d'être efficaces pour n'importe quel type de brouillage que celui-ci soit à bande étroite ou non. Le modelage du diagramme de rayonnement de l'antenne de réception peut être statique ou dynamique.

Un exemple de modelage statique du diagramme de rayonnement de l'antenne de réception se rencontre dans les récepteurs du système de navigation par satellites GPS où l'on utilise des antennes de réception architecturées de manière à présenter un diagramme de rayonnement hémisphérique, tourné vers le ciel et excluant les directions à faible angle de site, ce qui permet de favoriser la réception de signaux en provenance de satellites par rapport à la réception de signaux nécessairement de brouillage provenant d'émetteurs proches de la surface du sol.

Des exemples de modelage dynamique du diagramme de rayonnement de l'antenne de réception se rencontrent également dans les récepteurs de système de navigation par satellites pour lesquels il a été proposé d'utiliser des antennes de réception constituées à partir de réseaux d'antennes élémentaires et d'un combineur spatial réglable faisant une somme pondérée, en amplitude et en phase, des signaux captés par les différentes antennes élémentaires, et un automate de réglage du combineur spatial de l'antenne assurant soit la formation de voies pointées vers les satellites émettant les signaux utiles, ces voies correspondant à des faisceaux étroits dirigés vers les satellites concernés, technique connue sous la dénomination anglo-saxonne de "Beamsteered antenna array", soit la création de trous dans le diagramme de réception de l'antenne globale, dans les directions des brouilleurs, technique connue sous la dénomination anglo-saxonne de "Controlled Reception Pattern Antenna" ou, en abrégé CRPA.

La technique de "beam steered antenna array" est basée sur une connaissance a priori, des positions relatives des satellites émetteurs par rapport au récepteur.

La technique CPRA est basée sur :
- une formation statique de plusieurs voies indépendantes de réception à partir des signaux captés par les antennes élémentaires de l'antenne réseau utilisée pour la réception, l'indépendance entre voies de réception signifiant qu'aucune d'entre elles ne se réduit à une simple combinaison linéaire des autres,
- généralement, l'antenne centrale est choisie comme voie principale de réception, les autres étant considérées comme auxiliaires, et
- une formation dynamique d'une voie de réception dite "déparasitée" par ajout, au signal de la voie principale de réception, d'une combinaison linéaire des signaux des voies auxiliaires de réception pondérés en amplitude et en phase à l'aide de coefficients ajustés dynamiquement pour que les signaux de la voie de réception dite "déparasitée" et des voies auxiliaires de réception soient décorrélés.

On montre que le nombre possible de voies indépendantes de réception est inférieur ou égal à celui d'antennes élémentaires de l'antenne réseau de réception et que, pour pouvoir éliminer N brouilleurs, il faut avoir au moins N voies auxiliaires de réception indépendantes et donc disposer en réception d'une antenne réseau comportant au moins N+1 antennes élémentaires.

La technique d'antibrouillage par filtrage polarimétrique provient du domaine des radars. Elle est basée sur l'hypothèse selon laquelle le signal capté en réception, en polarimétrie croisée est essentiellement dû aux brouillages et qu'il est donc possible, en jouant sur la phase et l'amplitude du signal reçu en polarimétrie croisée, d'engendrer une image du brouillage affectant le signal capté en polarisation adaptée en vue de la retrancher du signal capté en polarisation adaptée et ainsi d'améliorer le rapport signal à bruit du signal utile. Cette hypothèse est en outre renforcée dans le domaine des récepteurs pour système de navigation par satellites, par le fait qu'il est impossible, pour une antenne de réception à diagramme de rayonnement hémisphérique, d'obtenir une voie à polarisation adaptée ou une voie à polarisation croisée dans toutes les directions de son diagramme de rayonnement, l'adaptation à la polarisation de l'onde reçue dans la voie de polarisation adaptée ou le croisement de polarisation par rapport à l'onde reçue dans la voie de polarisation croisée étant bien respectés autour de la normale à l'hémisphère et de moins en moins respectés lorsque l'on approche des bords de l'hémisphère. Cette impossibilité renforce encore la présence prépondérante, dans une voie de polarisation croisée, des signaux de brouillage les plus gênants qui sont ceux de même polarisation que le signal utile, puisqu'ils proviennent à l'antenne de réception par des angles d'incidence plus faibles que ceux par lesquels parviennent les signaux utiles, angles d'incidence plus faibles pour laquelle la voie croisée est moins désadaptée.

Comme le montre le brevet américain US 3,883,872, il a été rapidement envisagé d'appliquer cette technique d'antibrouillage par filtrage polarimétrique à la réception d'un canal d'information dans des systèmes de communication multicanaux employant la même bande de fréquence pour transmettre deux canaux d'informations simultanés selon des polarisations orthogonales, le deuxième canal d'information transmis en polarisation croisée étant alors considéré comme un signal de brouillage indésirable.

Plus récemment, il a été proposé de mettre en oeuvre cette technique d'antibrouillage par filtrage polarimétrique, dans le cadre d'un récepteur GPS. Le récepteur GPS est alors équipé d'une antenne de réception délivrant simultanément une voie de polarisation adaptée et une voie de polarisation croisée. Le signal de la voie de polarisation croisée de l'antenne de réception est soustrait du signal de la voie de polarisation adaptée, en ajustant son amplitude et sa phase pour obtenir un minimum d'amplitude pour le signal résultant, par exemple en minimisant la puissance de sortie sous contrainte. Pour davantage de détails sur cette technique d'antiparasitage par filtrage polarimétrique, on peut se reporter au brevet américain US 5,712,641.

Toutes ces techniques d'antibrouillage améliorent l'insensibilité aux brouillages des récepteurs de signaux radioélectriques à spectre étalé sans pour autant parvenir à une insensibilité totale, si bien que l'on cherche toujours des améliorations. C'est ainsi qu'il a été proposé, notamment dans le brevet américain US 6,141,371 de combiner les techniques d'antibrouillage par filtrage temporel et par filtrage spatial plus précisément de type CRPA.

Dans le brevet américain US 6,144,339 on y propose de combiner les techniques d'antibrouillage par filtrage polarimétrique et par filtrage spatial.

La présente invention a pour but d'améliorer l'insensibilité au brouillage des récepteurs de signaux radioélectriques à spectre étalé transmis par onde polarisée, notamment, dans le cadre d'un système de positionnement par satellites tel que le système GPS.

Elle a pour objet un procédé d'antibrouillage d'un récepteur de signaux radioélectrique à spectre étalé transmis par onde polarisée remarquable en ce qu'il consiste :
- à pourvoir ledit récepteur d'une antenne réseau de réception comportant des antennes élémentaires ayant au moins une voie de sortie dite adaptée, sensible à la polarisation de l'onde polarisée utilisée pour la transmission, certaines ayant en outre une deuxième voie de sortie dite croisée, sensible à une polarisation orthogonale à celle de l'onde polarisée utilisée pour la transmission,
- à effectuer des premiers traitements individuels d'antibrouillage par filtrage polarimétrique sur chacune des antennes élémentaires à voies de sortie adaptée et croisée pour tirer de chacune d'elles, par combinaison des signaux captés par leurs voies de sortie adaptée et croisée, un unique signal de réception ayant subi un premier déparasitage, et
- à effectuer globalement, au niveau des signaux de réception provenant des premiers traitements individuels d'antibrouillage et des signaux de réception captés par les antennes élémentaires dépourvues de voies de sortie croisée exploitée, un deuxième traitement général d'antibrouillage par filtrage spatial pour tirer par combinaison de ces signaux de réception, un signal de réception ayant subi un nouveau déparasitage, destiné à être exploité par le récepteur.

Avantageusement, les premiers traitements individuels d'antibrouillage par filtrage polarimétrique consistent à combiner linéairement, en phase et en amplitude, les signaux captés sur les voies de sortie adaptée et croisée d'une même antenne élémentaire de manière à obtenir un minimum d'énergie après traitement.

Avantageusement, les premiers traitements individuels d'antibrouillage par filtrage polarimétrique se font à l'aide de filtres polarimétriques ayant tous le même réglage, réglage qui est déterminé de manière à obtenir un minimum d'énergie après traitement pour l'une des antennes élémentaires à voies de sortie adaptée et croisée, prise pour référence.

Avantageusement, les premiers traitements d'antibrouillage par filtrage polarimétrique se font indépendamment les uns des autres, à l'aide de filtres polarimétriques réglés individuellement de manière à obtenir, à chaque fois, un minimum d'énergie après traitement.

Avantageusement, le deuxième traitement général d'antibrouillage par filtrage spatial consiste à combiner linéairement, en amplitude et en phase, les signaux de réception provenant des premiers traitements individuels d'antibrouillage par filtrage polarimétrique et les signaux de réception captés par les antennes élémentaires dépourvues de voie de sortie croisée exploitée, en vue d'un pointage électronique de l'antenne réseau de réception donnant au lobe principal de son diagramme de rayonnement la forme d'un faisceau étroit pointé en direction de la position de l'émetteur de l'onde polarisée utilisée pour la transmission des signaux radioélectriques à spectre étalé.

Avantageusement, le deuxième traitement général d'antibrouillage par filtrage spatial consiste à combiner linéairement, en amplitude et en phase, les signaux de réception provenant des premiers traitements individuels d'antibrouillage par filtrage polarimétrique et des signaux de réception captés par les antennes élémentaires dépourvues de voie de sortie croisée exploitée, en vue de créer des trous dans le diagramme de rayonnement de l'antenne réseau de réception dans les directions des brouilleurs.

Avantageusement, lorsque le deuxième traitement général d'antibrouillage par filtrage spatial consiste à combiner linéairement, en amplitude et en phase, les signaux de réception provenant des premiers traitements individuels d'antibrouillage par filtrage polarimétrique et des signaux de réception captés par les antennes élémentaires dépourvues de voie de sortie croisée exploitée, en vue de créer des trous dans le diagramme de rayonnement de l'antenne réseau de réception dans les directions des brouilleurs, l'une des antennes élémentaires à voies de sortie adaptée et croisée est considérée comme une antenne élémentaire de référence et les autres antennes élémentaires de l'antenne réseau comme des antennes élémentaires auxiliaires et les coefficients de la combinaison linéaire sont ajustés dynamiquement pour que le signal résultant de la combinaison linéaire soit décorrélé avec les signaux de réception le composant, à l'exception du signal de réception provenant de l'antenne élémentaire de référence après un premier traitement individuel d'antibrouillage par filtrage polarimétrique.

Avantageusement, les traitements polarimétriques et spatiaux peuvent être effectués simultanément lorsqu'au moins toutes les antennes élémentaires auxiliaires sont pourvues de deux voies de sorties de polarisation croisées.

Avantageusement, des traitements supplémentaires d'antibrouillage par filtrage spectral ou temporel sont effectués sur chacun des signaux de réception provenant des premiers traitements individuels d'antibrouillage par filtrage polarimétrique et des signaux de réception captés par les antennes élémentaires dépourvues de voie de sortie croisée exploitée, en amont du deuxième traitement général d'antibrouillage par filtrage spatial.

Avantageusement, un traitement supplémentaire d'antibrouillage par filtrage spectral ou temporel est effectué après le deuxième traitement général d'antibrouillage par filtrage spatial.

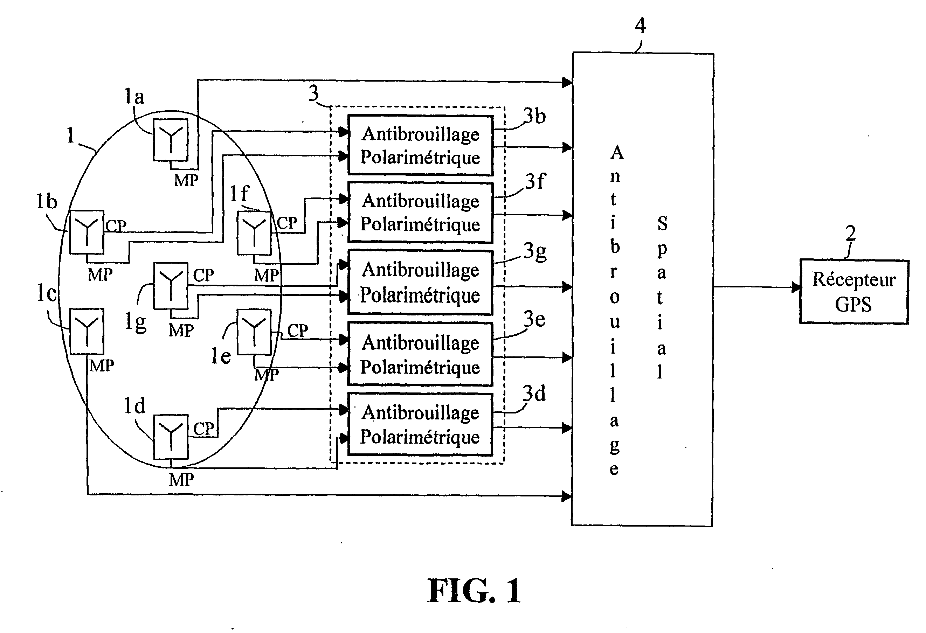

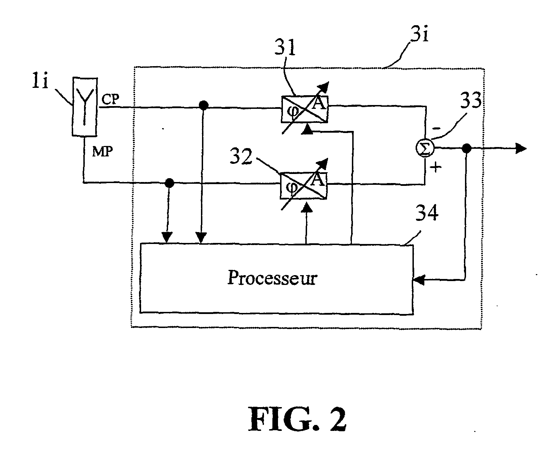

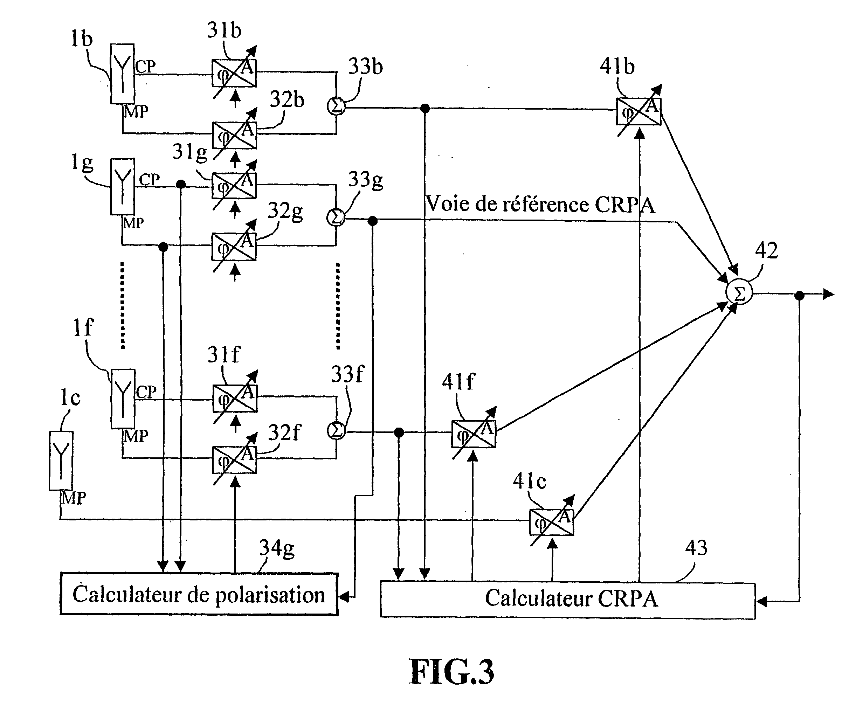

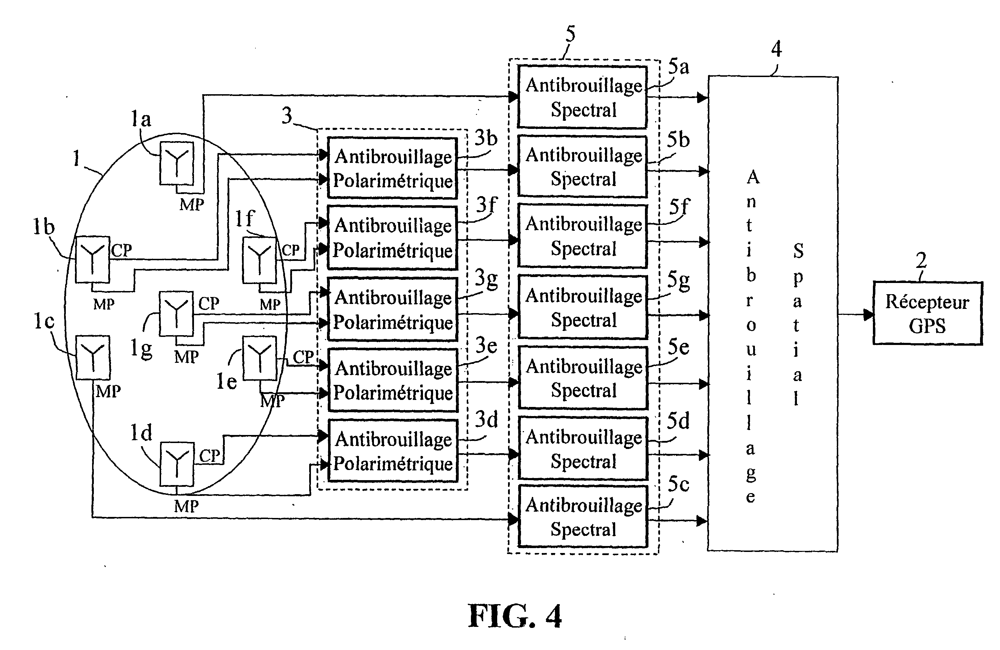

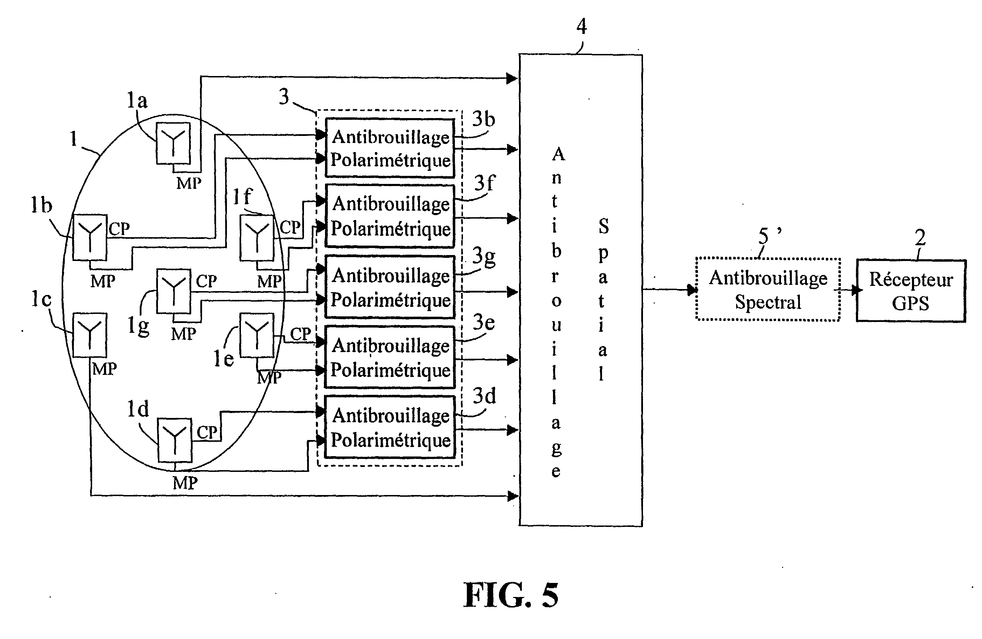

D'autres caractéristiques et avantages de l'invention ressortiront de la description ci-après de plusieurs modes de réalisation donnés à titre d'exemple. Cette description sera faite en regard du dessin dans lequel :
- une figure 1 illustre, sous forme d'un bloc diagramme, un dispositif d'antibrouillage conforme à l'invention,
- une figure 2 illustre un exemple de réalisation de filtrage polarimétrique pour antibrouillage,
- une figure 3 illustre un exemple de réalisation du dispositif d'antibrouillage montré à la figure 1, et
- des figures 4 et 5 illustrent deux variantes du dispositif d'antibrouillage montré à la figure 1, incorporant également un filtrage temporel ou spectral.

Le dispositif d'antibrouillage par filtrage polarimétrique et spatial représenté schématiquement à la figure 1 est destiné à traiter en réception, des signaux radioélectriques à spectre étalé provenant des satellites du système de navigation GPS. Il s'intercale entre une antenne de réception 1 captant les ondes émises par les satellites et un récepteur GPS 2 tout en pouvant éventuellement être décalé derrière les étages d'entrée du récepteur GPS 2 pour avoir accès à des signaux de fréquence plus basse se prêtant plus facilement à un traitement numérique. Il comporte un premier étage 3 à filtrages polarimétriques et un deuxième étage 4 à filtrage spatial.

L'antenne de réception 1 est une antenne réseau constituée d'un rassemblement de plusieurs antennes élémentaires 1a, 1b,..., 1g à diagramme de rayonnement hémisphérique dirigé vers le haut pour permettre de capter des signaux provenant de satellites défilants. Elle est configurée pour avoir une sensibilité tournée vers le ciel et limitée aux angles de sites supérieurs à quelques degrés pour être le moins possible influencée par les brouilleurs terrestres.

Les antennes élémentaires 1a, 1b,..., 1f constituant l'antenne de réception 1 peuvent être de diverses formes. Elles sont par exemple, de type "patch". On en connaît de nombreuses sortes décrites dans la technique antérieure comme celles décrites dans les brevets américains US 5,712,641 ou US 6,252,553. Certaines 1b, 1d, 1e, 1f, 1g de ses antennes élémentaires présentent deux voies simultanées de réception, l'une MP adaptée à la polarisation des ondes émises par les satellites du système de navigation, qui est la polarisation circulaire droite et l'autre CP, correspondant à la polarisation croisée qui est ici la polarisation circulaire gauche.

Lorsqu'une antenne élémentaire 1b, respectivement 1d, 1e, 1f ou 1g délivre simultanément une voie de réception MP adaptée à la polarisation de l'onde transmettant le signal utile et une voie de réception CP correspondant à la polarisation croisée, ses deux voies de réception sont combinées en une seule voie unifiée de réception par un combineur individuel réglable 3b, respectivement 3d, 3e, 3f ou 3g qui appartient à l'étage 3 à filtrages polarimétriques du dispositif d'antibrouillage et qui est ajusté pour réaliser une combinaison pondérée en phase et en amplitude favorisant le signal utile au détriment des signaux de brouillage. Les voies unifiées de réception provenant des combineurs individuels 3b, 3d, 3e, 3f, 3g et les voies de réception MP provenant des antennes élémentaires 1a, 1c dépourvues de voie de réception CP croisée ou avec des voies de réception CP croisées inexploitées sont ensuite appliquées à l'étage 4 à filtrage spatial du dispositif d'antibrouillage qui en réalise une combinaison globale, pondérée en phase et en amplitude favorisant encore davantage le signal utile au détriment des signaux de brouillage. Cette combinaison globale constitue le signal de réception déparasité délivré par le dispositif d'antibrouillage et soumis au récepteur GPS 2.

La constitution la plus générale d'un combineur individuel réglable 3i pourvu d'un dispositif d'ajustement, permettant d'unifier les deux voies de réception adaptée MP et croisée CP d'une antenne élémentaire 1i au sein de l'étage 3 à filtrages polarimétriques est illustrée dans la figure 2. On distingue dans cette figure 2, en tant qu'éléments du combineur individuel réglable 3i, deux atténuateurs/déphaseurs individuels réglables 31, 32 traitant l'un 31 la voie de réception croisée CP de l'antenne élémentaire 1i et l'autre 32 la voie de réception MP adaptée de l'antenne élémentaire 1i, un soustracteur 33 retranchant le signal de la voie de réception croisée CP disponible en sortie de l'atténuateur/déphaseur individuel réglable 31 du signal de la voie de réception adaptée MP disponible en sortie de l'atténuateur/déphaseur individuel réglable 32 pour constituer le signal de la voie unifiée de réception, et un processeur 34 qui détermine les réglages des atténuateurs/déphaseurs individuels réglables 31, 32 à partir des signaux présents en sortie d'antenne sur les voies de réception adaptée MP et croisée CP et du signal présent en sortie du soustracteur 33.

Pour déterminer les réglages des atténuateurs/déphaseurs individuels réglables 31, 32, le processeur 34 élabore les valeurs d'amplitude et de phase à appliquer aux voies adaptées MP et croisée CP de manière à minimiser la puissance des signaux interférents présentant une polarisation autre que circulaire droite.

La structure d'un combineur individuel réglable 3i de l'étage 3 à filtrages polarimétriques peut être simplifiée par élimination du processeur 34 dès lors que l'étage 3 à filtrages polarimétriques renferme déjà un combineur individuel réglable à structure complète. En effet, il est possible de prendre pour référence, une antenne élémentaire à deux voies de réception adaptée MP et croisée CP, par exemple l'antenne élémentaire 1g, de l'équiper d'un combineur individuel réglable à structure complète et d'équiper toutes les autres antennes élémentaires à deux voies de réception adaptée MP et croisée CP, les antennes élémentaires 1b, 1d, 1e, 1f dans l'exemple considéré, de combineurs individuels à structure simplifiée sans processeur reprenant les réglages adoptés par le combineur individuel réglable équipant l'antenne élémentaire de référence.

Il est également possible de partager un processeur unique entre tous les combineurs individuels réglables de l'étage 3 à filtrages polarimétriques. Plus généralement, il est possible d'appliquer au niveau de chaque antenne élémentaire, tous les traitements d'antibrouillage par filtrage polarimétrique qu'il est connu d'appliquer au niveau de deux voies de réception en polarisation orthogonale d'une antenne globale.

La figure 3 illustre un mode de réalisation possible d'un dispositif d'antibrouillage à filtrages polarimétriques et spatial. On y distingue, de la gauche vers la droite, les antennes élémentaires de l'antenne réseau de réception, les éléments des combineurs individuels réglables assurant les filtrages polarimétriques sous la commande d'un calculateur de polarisation et les éléments d'un combineur réglable assurant le filtrage spatial sous la commande d'un calculateur CRPA.

Parmi les antennes élémentaires représentées sur la figure 3, certaines 1c n'ont que la voie de réception adaptée MP exploitée de sorte que leur signal de réception n'est soumis à aucun traitement d'antibrouillage par filtrage polarimétrique tandis que d'autres 1b, 1g,..,1f ont deux voies de réception, une voie adaptée MP et une voie croisée CP exploitées et unifiées par des filtrages polarimétriques d'antibrouillage.

Les filtrages polarimétriques d'antibrouillage faits au niveau des antennes élémentaires 1b, respectivement 1g,..., 1f ayant deux voies de réception exploitées, l'une adaptée MP, l'autre croisée CP, au moyen de combineurs réglables individuels 31b, 32b, 32c, respectivement 31g, 32g, 33g,..., 31f, 32f, 33f sont tous identiques car ils utilisent les mêmes réglages déterminés par un calculateur de polarisation 34g prenant l'antenne élémentaire 1 g pour référence.

Le filtrage spatial s'effectue sur les voies de réception unifiées résultant des filtrages polarimétriques d'antibrouillage appliqués aux antennes élémentaires 1b, 1g,..., 1f ayant deux voies de réception exploitées, l'une adaptée MP et l'autre croisée CP et sur les voies de réception adaptées MP des antennes élémentaires 1c n'ayant qu'une voie de réception exploitée, au moyen d'un combineur formé d'atténuateurs/déphaseurs individuels réglables 41b, 41f, 41c équipant toutes les voies de réception prise en compte à l'exception de la voie unifiée de réception provenant de l'antenne élémentaire 1g prise pour référence dans le filtrage spatial, d'un sommateur 42 sommant les différentes voies prises en compte et d'un calculateur de coefficients de réglage 43 mettant en oeuvre la technique CRPA mentionnée précédemment, technique qui consiste à créer des trous dans le diagramme de rayonnement de l'antenne réseau de réception 1, dans les directions des brouilleurs, et qui repose sur la méthode de réduction dynamique de la puissance des signaux parasites par opposition des lobes secondaires développée par les radaristes et connue sous le sigle O.L.S. pour "Opposition des Lobes Secondaires" (en anglo-saxon C.S.L.C. pour "Coherent Side Lobe Canceller").

Comme indiqué précédemment, il est également possible de réaliser le filtrage spatial d'antibrouillage en mettant en oeuvre la technique de formation de faisceaux par le calcul dite FFC ("Beamsteered array en anglo-saxon) également développée par les radaristes, qui consiste à combiner en phase et en amplitude les signaux des voies de réception soumises au filtrage spatial de manière à obtenir, dans le diagramme de rayonnement de l'antenne globale, un ou plusieurs faisceaux étroits dirigés vers les émetteurs de signaux utiles. Cette technique ne fait pas appel à une voie de référence. Elle nécessite la présence d'atténuateurs/déphaseurs réglables sur toutes les voies de réception prises en compte ainsi que la connaissance des directions relatives des émetteurs de signaux utiles par rapport au récepteur. Plus généralement, il est possible d'appliquer au niveau de l'étage de filtrage spatial (4 figure 1) toutes les techniques d'antibrouillage par filtrage spatial déjà connues.

Les figures 4 et 5 illustrent des variantes de dispositif d'antibrouillage qui se différencient du dispositif d'antibrouillage décrit relativement à la figure 1 par l'adjonction d'un étage d'antibrouillage par filtrage temporel ou spectral. Dans ces figures 4 et 5, les éléments invariants par rapport à la figure 1 ont conservé leurs repères d'origine.

Comme indiqué précédemment, l'antibrouillage par filtrage temporel ou spectral consiste à supprimer ou réduire les raies spectrales dépassant du bruit dans la bande de fréquence occupée par les signaux utiles à spectre étalé car celle-ci ne peuvent provenir que d'un brouillage. Cette suppression ou réduction de raies spectrales joue également sur les composantes de mêmes fréquence du signal utile à spectre étalé qui se trouve de ce fait appauvri mais cet appauvrissement est tolérable tant qu'il ne dépasse pas 10 à 20 pour cent de la bande de fréquence utilisée. Les raies spectrales parasites sont détectées par analyse spectrale et supprimées ou réduites par un filtrage adapté réalisé dans le domaine fréquentiel ou temporel. Il existe de nombreuses façons de pratiquer l'antibrouillage par filtrage temporel ou spectral. Certaines sont évoquées dans le brevet américain US 6,141,371 déjà cité.

Dans le dispositif d'antibrouillage représenté à la figure 4, l'antibrouillage par filtrage temporel ou spectral intervient à la suite de l'antibrouillage par filtrage polarimétrique mais préalablement à l'antibrouillage par filtrage spatial. Pour le réaliser, un étage 5 à filtrages temporels ou spectraux est intercalé entre l'étage à filtrages polarimétriques 3 et l'étage 4 à filtrage spatial. Cet étage 5 à filtrages temporels ou spectraux est composé de filtres temporels ou spectraux individuels 5a, 5b, 5f, 5g, 5e, 5d, 5c à coefficients ajustables, qui traitent chacune des voies de réception prises en compte par le filtrage spatial. Comme dans le cas des filtres polarimétriques, les filtres temporels ou spectraux peuvent avoir tous le même réglage élaboré par un processeur à partir des caractéristiques du signal empruntant l'une des voies de réception prise pour référence.

Dans le dispositif d'antibrouillage de la figure 5, l'antibrouillage par filtrage temporel ou spectral intervient en dernier après l'antibrouillage par filtrage spatial. Sa réalisation est plus simple que dans le cas de la figure 4 précédente puisqu'elle ne nécessite plus qu'un seul filtre temporel ou spectral 5' à coefficients ajustables. En contrepartie, son effet bénéfique de réduction de la puissance de brouillage ne se fait pas sentir au niveau de la détermination des coefficients de pondération en amplitude et phase du filtre spatial.

Pour la facilité de la compréhension, les traitements de filtrages polarimétrique et spatial ont été montrés, sur les figures 1, 3, 4 et 5 comme réalisés par des circuits distincts. Il est bien évident que dans la pratique, les deux filtrages polarimétrique et spatial peuvent être menés à bien par un circuit commun. Lorsque les filtrages polarimétrique et spatial sont effectués derrière les étages d'entrée d'un récepteur au niveau de signaux disponibles sous formes d'échantillons numérisés, ils peuvent être en effet confiés à un unique processeur de traitement de signal à la condition que celui-ci ait une puissance de calcul suffisante.

## Revendications

1. Procédé d'antibrouillage d'un récepteur (2) de signaux radioélectriques à spectre étalé transmis par onde polarisée **caractérisé en ce qu'**il consiste :
- à pourvoir ledit récepteur (2) d'une antenne réseau de réception (1) comportant des antennes élémentaires (1a à 1g) ayant au moins une voie de sortie MP dite adaptée, sensible à la polarisation de l'onde polarisée utilisée pour la transmission, certaines antennes élémentaires (1b, 1d, 1e, 1f, 1g) ayant en outre une deuxième voie de sortie CP dite croisée, sensible à une polarisation orthogonale à celle de l'onde polarisée utilisée pour la transmission,
- à effectuer des premiers traitements individuels d'antibrouillage par filtrage polarimétrique (3) sur chacune des antennes élémentaires (1b, 1d, 1e, 1f, 1g) à voies de sortie adaptée MP et croisée CP pour tirer de chacune d'elles, par combinaison des signaux captés par leurs voies de sortie adaptée MP et croisée CP, un unique signal de réception ayant subi un premier déparasitage, et
- à effectuer globalement, au niveau des signaux de réception provenant des premiers traitements individuels d'antibrouillage par filtrage polarimétrique (3) et des signaux de réception captés par les antennes élémentaires (1a, 1c) dépourvues de voies de sortie croisée CP exploitée, un deuxième traitement général d'antibrouillage par filtrage spatial (4) pour tirer par combinaison de ces signaux de réception, un signal de réception ayant subi un nouveau déparasitage, destiné à être exploité par le récepteur (2).

2. Procédé selon la revendication 1, **caractérisé en ce que** les traitements d'antibrouillage polarimétrique et spatial sont effectués simultanément par un même circuit de traitement.

3. Procédé selon les revendications 1 ou 2, **caractérisé en ce que**, les premiers traitements individuels d'antibrouillage par filtrage polarimétrique (3) consistent à combiner linéairement, en phase et en amplitude, les signaux captés sur les voies de sortie adaptée MP et croisée CP d'une même antenne élémentaire (1b, 1d, 1e, 1f, 1g) de manière à obtenir un minimum d'énergie après traitement.

4. Procédé selon les revendications 1 ou 2, **caractérisé en ce que** les premiers traitements individuels d'antibrouillage par filtrage polarimétrique (3) se font à l'aide de filtres polarimétriques (31i ,32i, 33i) ayant tous le même réglage, réglage qui est déterminé de manière à obtenir un minimum d'énergie après traitement pour l'une des antennes élémentaires à voies de sortie adaptée et croisée, prise pour référence.

5. Procédé selon les revendications 1 ou 2, **caractérisé en ce que** les premiers traitements individuels d'antibrouillage par filtrage polarimétrique (3) se font indépendamment les uns des autres, à l'aide de filtres polarimétriques (31i, 32i, 33i) réglés individuellement de manière à obtenir, à chaque fois, un minimum d'énergie après traitement

6. Procédé selon la revendication 1, **caractérisé en ce que** le deuxième traitement général d'antibrouillage par filtrage spatial (4) consiste à combiner linéairement, en amplitude et en phase, les signaux de réception provenant des premiers traitements individuels d'antibrouillage par filtrage polarimétrique (3) et les signaux de réception captés par les antennes élémentaires (1a, 1c) dépourvues de voie de sortie croisée CP exploitée, en vue d'un pointage électronique de l'antenne réseau de réception (1) donnant au lobe principal de son diagramme de rayonnement la forme d'un faisceau étroit pointé en direction de la position de l'émetteur de l'onde polarisée utilisée pour la transmission des signaux radioélectriques à spectre étalé.

7. Procédé selon la revendication 1, **caractérisé en ce que** le deuxième traitement général d'antibrouillage par filtrage spatial (4) consiste à combiner linéairement, en amplitude et en phase, les signaux de réception provenant des premiers traitements individuels d'antibrouillage par filtrage polarimétrique (3) et des signaux de réception captés par les antennes élémentaires (1a, 1c) dépourvues de voie de sortie croisée CP exploitée, en vue de créer des trous dans le diagramme de rayonnement de l'antenne réseau de réception (1) dans les directions des brouilleurs.

8. Procédé selon les revendications 1 ou 2, **caractérisé en ce que**, lorsque le deuxième traitement général d'antibrouillage par filtrage spatial consiste à combiner linéairement, en amplitude et en phase, les signaux de réception provenant des premiers traitements individuels d'antibrouillage par filtrage polarimétrique (3) et des signaux de réception captés par les antennes élémentaires (1a, 1c) dépourvues de voie de sortie croisée CP exploitée, en vue de créer des trous dans le diagramme de rayonnement de l'antenne réseau de réception dans les directions des brouilleurs, l'une (1g) des antennes élémentaires à voies de sortie adaptée MP et croisée CP est considérée comme une antenne élémentaire de référence et les autres antennes élémentaires (1a, 1b, 1c, 1d, 1e, 1f) de l'antenne réseau (1) comme des antennes élémentaires auxiliaires et les coefficients de la combinaison linéaire sont ajustés dynamiquement pour que le signal résultant de la combinaison linéaire soit décorrélé avec les signaux de réception le composant, à l'exception du signal de réception provenant de l'antenne élémentaire de référence (1g) après un premier traitement individuel d'antibrouillage par filtrage polarimétrique (3).

9. Procédé selon les revendications 1 ou 2, **caractérisé en ce que**, des traitements supplémentaires d'antibrouillage par filtrage temporel ou spectral (5) sont effectués sur chacun des signaux de réception provenant des premiers traitements individuels d'antibrouillage par filtrage polarimétrique (3) et des signaux de réception captés par les antennes élémentaires (1a, 1c) dépourvues de voie de sortie croisée CP exploitée, en amont du deuxième traitement général d'antibrouillage par filtrage spatial (4).

10. Procédé selon les revendications 1 et 2, **caractérisé en ce qu'**un traitement supplémentaire d'antibrouillage par filtrage temporel ou spectral (5') est effectué après le deuxième traitement général d'antibrouillage par filtrage spatial (4).

## Patentansprüche

1. Verfahren zur Entstörung eines Empfängers (2) von funkelektrischen Signalen mit Spreizspektrum, die auf einer polarisierten Welle übertragen werden, **dadurch gekennzeichnet, dass** es darin besteht:
- den Empfänger (2) mit einer Empfangsnetzantenne (1) zu versehen, die Elementarantennen (1a bis 1g) aufweist, die mindestens einen so genannten "angepassten" Ausgangskanal MP aufweisen, der auf die Polarisierung der zur Übertragung verwendeten polarisierten Welle anspricht, wobei bestimmte Elementarantennen (1b, 1d, 1e, 1f, 1g) außerdem einen zweiten, so genannten "gekreuzten" Ausgangskanal CP aufweisen, der auf eine Polarisation anspricht, die orthogonal zu derjenigen der für die Übertragung genutzten polarisierten Welle ist,
- erste individuelle Entstörungsbehandlungen durch polarimetrisches Filtern (3) an jeder der Elementarantennen (1b, 1d, 1e, 1f, 1g) mit angepasstem Ausgangskanal MP und gekreuztem Ausgangskanal CP durchzuführen, um aus jeder von ihnen durch Kombination der von ihrem angepassten Ausgangskanal MP und gekreuztem Ausgangskanal CP erfassten Signale ein einziges Empfangssignal zu entnehmen, das eine erste Entstörung erfahren hat, und
- global in Höhe der von den ersten individuellen Entstörungsbehandlungen durch polarimetrisches Filtern (3) kommenden Empfangssignale und der von den keinen benutzten gekreuzten Ausgangskanal CP aufweisenden Elementarantennen (1a, 1c) erfassten Empfangssignale eine zweite allgemeine Entstörungsbehandlung durch räumliches Filtern (4) durchzuführen, um durch Kombination dieser Empfangssignale ein Empfangssignal zu erhalten, das einer weiteren Entstörung unterzogen wurde und dazu bestimmt ist, vom Empfänger (2) genutzt zu werden.

2. Verfahren nach Anspruch 1, **dadurch gekennzeichnet, dass** die polarimetrische und die räumliche Entstörungsbehandlung gleichzeitig von einer gemeinsamen Verarbeitungsschaltung durchgeführt werden.

3. Verfahren nach den Ansprüchen 1 oder 2, **dadurch gekennzeichnet, dass** die ersten individuellen Entstörungsbehandlungen durch polarimetrisches Filtern (3) darin bestehen, die Signale nach Phase und Amplitude linear zu kombinieren, die auf dem angepasstes Ausgangskanal MP und dem gekreuzten Ausgangskanal CP der gleichen Elementarantenne (1b, 1d, 1e, 1f, 1g) erfasst werden, um ein Minimum an Energie nach der Behandlung zu erhalten.

4. Verfahren nach den Ansprüchen 1 oder 2, **dadurch gekennzeichnet, dass** die ersten individuellen Entstörungsbehandlungen durch polarimetrisches Filtern (3) mit Hilfe von polarimetrischen Filtern (31i, 32i, 33i) erfolgen, die alle die gleiche Abstimmung haben, die so bestimmt wird, dass für eine der Elementarantennen mit angepasstem und gekreuztem Ausgangskanal, die als Bezug genommen wird, ein Minimum an Energie nach der Behandlung erhalten wird.

5. Verfahren nach den Ansprüchen 1 oder 2, **dadurch gekennzeichnet, dass** die ersten individuellen Entstörungsbehandlungen durch polarimetrisches Filtern (3) unabhängig voneinander mit Hilfe von polarimetrischen Filtern (31i, 32i, 33i) erfolgen, die individuell abgestimmt werden, um jedes Mal ein Minimum an Energie nach der Behandlung zu erhalten.

6. Verfahren nach Anspruch 1, **dadurch gekennzeichnet, dass** die zweite allgemeine Entstörungsbehandlung durch räumliches Filtern (4) darin besteht, die Empfangssignale, die von den ersten individuellen Entstörungsbehandlungen durch polarimetrisches Filtern (3) kommen, und die Empfangssignale, die von den Elementarantennen (1a, 1c) erfasst werden, die keinen genutzten gekreuzten Ausgangskanal CP aufweisen, nach Amplitude und Phase linear zu kombinieren, um eine elektronische Ausrichtung der Empfangsnetzantenne (1) zu erhalten, die der Hauptkeule ihres Strahlungsdiagramms die Form eines schmalen, in Richtung der Position des Senders der zur Übertragung der funkelektrischen Signale mit Spreizspektrum verwendeten polarisierten Welle zeigenden Strahls verleiht.

7. Verfahren nach Anspruch 1, **dadurch gekennzeichnet, dass** die zweite allgemeine Entstörungsbehandlung durch räumliches Filtern (4) darin besteht, die von den ersten individuellen Entstörungsbehandlungen durch polarimetrisches Filtern (3) kommenden Empfangssignale und von den keinen benutzten gekreuzten Ausgangskanal CP aufweisenden Elementarantennen (1a, 1c) erfassten Empfangssignale nach Amplitude und Phase linear zu kombinieren, um Löcher im Strahlungsdiagramm der Empfangsnetzantenne (1) in Richtung der Störsignale zu erzeugen.

8. Verfahren nach den Ansprüchen 1 oder 2, **dadurch gekennzeichnet, dass**, wenn die zweite allgemeine Entstörungsbehandlung durch räumliches Filtern darin besteht, die Empfangssignale, die von den ersten individuellen Entstörungsbehandlungen durch polarimetrisches Filtern (3) kommen, und Empfangssignale in Amplitude und Phase linear zu kombinieren, die von den keinen benutzten gekreuzten Ausgangskanal CP aufweisenden Elementarantennen (1a, 1c) kommen, um Löcher im Strahlungsdiagramm der Empfangsnetzantenne in Richtung der Störsignalquellen zu erzeugen, eine der Elementarantennen (1g) mit angepasstem Ausgangskanal MP und gekreuztem Ausgangskanal CP als eine Bezugs-Elementarantenne und die anderen Elementarantennen (1a, 1b, 1c, 1d, 1e, 1f) der Netzantenne (1) als Hilfs-Elementarantennen betrachtet werden, und die Koeffizienten der linearen Kombination dynamisch eingestellt werden, damit das aus der linearen Kombination resultierende Signal mit den es bildenden Empfangssignalen dekorreliert wird, mit Ausnahme des von der Bezugs-Elementarantenne (1g) kommenden Empfangssignals, nach einer ersten individuellen Entstörungsbehandlung durch polarimetrisches Filtern (3).

9. Verfahren nach den Ansprüchen 1 oder 2, **dadurch gekennzeichnet, dass** vor der zweiten allgemeinen Entstörungsbehandlung durch räumliches Filtern (4) zusätzliche Entstörungsbehandlungen durch zeitliches oder spektrales Filtern (5) an jedem der Empfangssignale, die von den ersten individuellen Entstörungsbehandlungen durch polarimetrisches Filtern (3) kommen, und an den Empfangssignalen durchgeführt werden, die von den keinen betriebenen gekreuzten Ausgangskanal CP aufweisenden Elementarantennen (1a, 1c) kommen.

10. Verfahren nach den Ansprüchen 1 und 2, **dadurch gekennzeichnet, dass** eine zusätzliche Entstörungsbehandlung durch zeitliches oder spektrales Filtern (5') nach der zweiten allgemeinen Entstörungsbehandlung durch räumliches Filtern (4) durchgeführt wird.

## Claims

1. Antijamming method for a receiver (2) of spread spectrum radio signals transmitted by polarized wave, **characterized in that** it consists:
- in providing said receiver (2) with a receive array antenna (1) comprising elementary antennas (1a to 1g) having at least one so-called matched output path MP, sensitive to the polarization of the polarized wave used for the transmission, certain elementary antennas (1b, 1d, 1e, 1f, 1g) furthermore having a second so-called cross output path CP, sensitive to a polarization orthogonal to that of the polarized wave used for the transmission,
- in performing first individual antijamming processings by polarimetric filtering (3) on each of the elementary antennas (1b, 1d, 1e, 1f, 1g) with matched MP and cross CP output paths so as to derive from each of them, by combining the signals picked up by their matched MP and cross CP output paths, a single reception signal having undergone a first degarbling, and
- in globally performing, at the level of the reception signals originating from the first individual antijamming processings by polarimetric filtering (3) and the reception signals picked up by the elementary antennas (1a, 1c) devoid of cross output paths CP utilized, a second general antijamming processing by spatial filtering (4) so as to derive by combining these reception signals, a reception signal having undergone a new degarbling, intended to be utilized by the receiver (2).

2. Method according to Claim 1, **characterized in that** the polarimetric and spatial antijamming processings are performed simultaneously by one and the same processing circuit.

3. Method according to Claims 1 or 2, **characterized in that** the first individual antijamming processings by polarimetric filtering (3) consist in linearly combining, in phase and in amplitude, the signals picked up on the matched MP and cross CP output paths of one and the same elementary antenna (1b, 1d, 1e, 1f, 1g) in such a way as to obtain a minimum of energy after processing.

4. Method according to Claims 1 or 2, **characterized in that** the first individual antijamming processings by polarimetric filtering (3) are done with the aid of polarimetric filters (31i, 32i, 33i) all having the same adjustment, which adjustment is determined in such a way as to obtain a minimum of energy after processing for the one, taken as reference, of the elementary antennas with matched and cross output paths.

5. Method according to Claims 1 or 2, **characterized in that** the first individual antijamming processings by polarimetric filtering (3) are done independently of one another, with the aid of polarimetric filters (31i, 32i, 33i) adjusted individually in such a way as to obtain, each time, a minimum of energy after processing.

6. Method according to Claim 1, **characterized in that** the second general antijamming processing by spatial filtering (4) consists in linearly combining, in amplitude and in phase, the reception signals originating from the first individual antijamming processings by polarimetric filtering (3) and the reception signals picked up by the elementary antennas (1a, 1c) devoid of cross output path CP utilized, with a view to electronic pointing of the receive array antenna (1) giving the main lobe of its radiation pattern the form of a narrow beam pointing in the direction of the position of the emitter of the polarized wave used for the transmission of the spread spectrum radio signals.

7. Method according to Claim 1, **characterized in that** the second general antijamming processing by spatial filtering (4) consists in linearly combining, in amplitude and in phase, the reception signals originating from the first individual antijamming processings by polarimetric filtering (3) and the reception signals picked up by the elementary antennas (1a, 1c) devoid of cross output path CP utilized, with a view to creating nulls in the radiation pattern of the receive array antenna (1) in the directions of the jammers.

8. Method according to Claims 1 or 2, **characterized in that**, when the second general antijamming processing by spatial filtering consists in linearly combining, in amplitude and in phase, the reception signals originating from the first individual antijamming processings by polarimetric filtering (3) and the reception signals picked up by the elementary antennas (1a, 1c) devoid of cross output path CP utilized, with a view to creating nulls in the radiation pattern of the receive array antenna in the directions of the jammers, one (1g) of the elementary antennas with matched MP and cross CP output paths is regarded as a reference elementary antenna and the other elementary antennas (1a, 1b, 1c, 1d, 1e, 1f) of the array antenna (1) as auxiliary elementary antennas and the coefficients of the linear combination are altered dynamically so that the signal resulting from the linear combination is decorrelated with the reception signals of which it is composed, with the exception of the reception signal originating from the reference elementary antenna (1g) after a first individual antijamming processing by polarimetric filtering (3).

9. Method according to Claims 1 or 2, **characterized in that**, additional antijamming processings by temporal or spectral filtering (5) are performed on each of the reception signals originating from the first individual antijamming processings by polarimetric filtering (3) and the reception signals picked up by the elementary antennas (1a, 1c) devoid of cross output path CP utilized, upstream of the second general antijamming processing by spatial filtering (4).

10. Method according to Claims 1 and 2, **characterized in that** an additional antijamming processing by temporal or spectral filtering (5') is performed after the second general antijamming processing by spatial filtering (4).
